**Europäisches Patentamt**

(19) **European Patent Office**

**Office européen des brevets**

(11) Publication number : **0 360 563 B1**

(12) **EUROPEAN PATENT SPECIFICATION**

(45) Date of publication of patent specification :
19.08.92 Bulletin 92/34

(51) Int. Cl.⁵ : **C04B 35/00**

(21) Application number : **89309523.2**

(22) Date of filing : **19.09.89**

(54) **Method of producing ceramic honeycomb structural bodies.**

The file contains technical information
submitted after the application was filed and
not included in this specification

(30) Priority : **20.09.88 JP 233392/88**

(43) Date of publication of application :
**28.03.90 Bulletin 90/13**

(45) Publication of the grant of the patent :
**19.08.92 Bulletin 92/34**

(84) Designated Contracting States :
**BE DE FR GB IT SE**

(56) References cited :
**EP-A- 0 107 345**
**DE-A- 3 001 640**
**US-A- 3 885 977**
**US-A- 4 025 462**
**US-A- 4 329 162**

(56) References cited :
**CHEMICAL ABSTRACTS, vol. 100, no. 14, 12th
April 1984, page 293, column 2, abstract no.
108185m, Columbus, Ohio, US; &JP-A-58 181
763 (NIPPON OILS & FATS K.K.) 24-10-1983**

(73) Proprietor : **NGK INSULATORS, LTD.**
**2-56, Suda-cho, Mizuho-ku**
**Nagoya City Aichi Pref. (JP)**

(72) Inventor : **Adachi, Masakazu**
**52, Marune-Cho 2-Chome Mizuho-Ku**
**Nagoya City Aichi Pref. (JP)**
Inventor : **Yamada, Shunichi**
**35-2, Mikage-Cho 2-Chome Chikusa-Ku**
**Nagoya City Aichi Pref. (JP)**
Inventor : **Harada, Takashi**
**248, Ohari 1-Chome Meito-Ku**
**Nagoya City Aichi Pref. (JP)**

(74) Representative : **Paget, Hugh Charles Edward
et al
MEWBURN ELLIS 2 Cursitor Street
London EC4A 1BQ (GB)**

Jouve, 18, rue Saint-Denis, 75001 PARIS

## Description

The present invention relates to a method of producing cordierite ceramic honeycomb structural bodies by extruding.

Generally, ceramic honeycomb structural bodies are used as catalyst carriers for purification of an exhaust gas from internal combustion engine for automobiles and therefore are required to have various characteristics such as a high thermal shock resistance, low coefficient of thermal expansion, high porosity necessary for carrying a catalyst and high water absorption.

Japanese Patent Application Laid-open Publication No. 50-75611 discloses a cordierite honeycomb structural body extruding method wherein methyl cellulose is used as a binder and diethylene glycol stearate is used as a surface-active agent. The binder provides a binding force, plasticity and extrudability for a kneaded raw material and also provides a green strength for an extruded product. In particular, when the raw material is extruded through an extruding die to shape a honeycomb structural body, the surface-active agent acts to reduce the extruding pressure and to assist for arranging homogeneously and packing the particles of the raw material.

The cordierite ceramic honeycomb structural bodies must have a characteristic that platy particles of raw material such as kaolin are orientated by extruding as disclosed in Japanese Patent Application Laid-open Publication No. 50-75611. Accordingly, it is important that the surface-active agent used for extruding the cordierite ceramic honeycomb structural bodies must effect to promote the orientation of the platy particles.

The diethylene glycol stearate however is not always satisfactory as such a surface-active agent since it is nonionic and lacks affinity with water used as a plasticizer so that it is difficult to control the packing of the raw material. In particular, the diethylene glycol stearate causes the green body to be relatively compact upon extruding to thereby deteriorate the water absorption of the fired honeycomb structural bodies.

Furthermore, when the diethylene glycol stearate is used as the surface-active agent, the diethylene glycol stearate having superior lubricating properties provides an excellent extrudability to the raw material and makes it possible to extrude a green body having a desired green strength required before firing, but there are disadvantages that the diethylene glycol stearate has a little effect to orientate particles of raw material so that honeycomb structural bodies obtained by firing have a high coefficient of thermal expansion and a low thermal shock resistance.

An object of the present invention is to avoid or eliminate the above mentioned disadvantages and to provide a method of producing cordierite ceramic honeycomb structural bodies which can give better characteristics such as higher water absorption, lower coefficient of thermal expansion and larger thermal shock resistance.

The method of producing cordierite ceramic honeycomb structural bodies according to the present invention is set out in claim 1.

The inventors of the present invention have been investigated various surface-active agents having substantially the same lubricity and wettability as that of the diethylene glycol stearate as well as extrudability providing the desired orientation of the platy particles and a behavior of providing the necessary green strength for the extruded green body and further providing superior characteristics for a product after firing and as a result, found that fatty acid alkali metal salt series soaps are most usable as a surface-active agent for extruding the ceramic honeycomb structural bodies.

That is, by using a fatty acid alkali metal salt series surface-active agent without any pore forming agent, the raw material is coarsely packed by a surface activation between particles so that the average diameter of pores is large, thereby increasing the water absorption of the fired honeycomb structural bodies in a controlled manner. Furthermore, since the fatty acid alkali metal salt series soaps can provide the desired orientation for the platy particles of raw material such as kaolin, talc or the like, it is possible to lower the coefficient of thermal expansion and to increase the thermal shock resistance.

It is preferable that as a surface-active agent, one to five fatty acid alkali metal salt series soaps selected from the group consisting of lauric acid alkali soap, oleic acid alkali soap, caprylic acid alkali soap, palmitic acid alkali soap and stearic acid alkali soap are used in total amount of 0.1~2.0 wt%. In particular, lauric acid alkali soaps are preferably used in amount of 0.1~2.0 wt% as appear from examples mentioned below.

In the following, examples of the present invention will be given. These examples are merely given in illustration of the invention and should not be interpreted to limit the scope of the invention.

## Example 1

A plurality of mixtures were prepared by using 100 parts by weight of raw material prepared powder having a batch composition shown in Table 1, 4 parts by weight of methyl cellulose and surface-active agents shown in Table 2. Each mixture was extruded to shape a honeycomb structural body having an outer diameter of 102 mm, a height of 89 mm and a partition wall thickness of 150 μm with the number of cells being 62/cm$^2$.

Green bodies of honeycomb structural bodies thus extruded were dried and then fired at 1400°C for three hours and cordierite ceramic honeycomb structural bodies were obtained.

## Table 1

| | Raw material powder | | | Binder |
|---|---|---|---|---|
| Prepared Raw Material | Talc | Kaolin + Calcined kaolin | Alumina | Methyl cellulose |
| Composition (wt%) | 39.1 | 47.4 | 13.5 | 4.0 |

EP 0 360 563 B1

## Table 2

| Surface-active agent | Reference example | Present invention | | | | | | | |
| --- | --- | --- | --- | --- | --- | --- | --- | --- | --- |
| | Diethylene glycol stearate | Lauric acid | | Oleic acid | | Stearic acid | | Caprylic acid sodium soap | Palmitic acid sodium soap |
| | | Potassium soap | Sodium soap | Potassium soap | Sodium soap | Potassium soap | Sodium soap | | |
| Amount of addition (wt%) | 1.0 | 0.5 | | | | | | | |
| Surface activation | △ | ◎ | ◎ | ○ | ○ | ○ | ○ | ○ | ○ |
| Coefficient of thermal expansion ($\times 10^{-6}$/40~800°C) | 0.9 | 0.6 | 0.6 | 0.7 | 0.7 | 0.7 | 0.7 | 0.8 | 0.7 |
| Water absorption (%) | 19.2 | 21.5 | 21.5 | 20.5 | 20.7 | 19.8 | 19.5 | 20.1 | 19.7 |
| Average diameter of pore (μm) | 5.7 | 7.6 | 7.5 | 7.1 | 6.1 | 6.4 | 6.1 | 6.2 | 6.0 |
| Spalling strength in electric furnace (°C) | 800 | 950 | 950 | 900 | 900 | 900 | 900 | 850 | 950 |

From the result of Table 2, it is appreciated that the lauric acid alkali metal salt series soaps have more superior characteristics for the surface-active agent than diethylene glycol stearate of the reference example. The surface activity of the surface-active agent was estimated from an amplitude of a load current of a kneader when kneading. In Table 2, the small, medium and large amplitudes are represented by marks ⊚, ○ and △, respectively. Also, it is appreciated that the extrudability of kneaded raw material used the surface-active agent in accordance of the present invention is better than that of the reference example.

In Table 2, there are also shown characteristics of the honeycomb structural bodies after fired and it is appreciated that the coefficient of thermal expansion ($\times 10^{-6}/°C$) in the extruding direction in a temperature range of 40°C~800°C is 0.9 in the reference example, while is more reduced to 0.6 with using lauric acid alkali metal salt series soaps. Further, the water absorption is 19.2% in the reference example, while is significantly increased to 21.5% with using lauric acid alkali metal salt series soaps. The "spalling strength in electric furnace" in Table 2 is represented by a factor of temperature which was determined in a manner that the honeycomb structural body is kept for twenty minutes at a test temperature which is stepped up with an increment of 25°C from 700°C in an electric furnace and after cooled to the room temperature a ping test is carried out to determine whether the test temperature is critical or not since if the honeycomb structural body was spalled at the test temperature, then a ping sound changes to a dull sound. It is appreciated from Table 2 that the "spalling strength in electric furnace" correlates to the value of the coefficient of thermal expansion and the honeycomb structural body extruded by using lauric acid alkali metal salt series soaps has the maximum spalling strength of 950°C and thus a large thermal shock resistance.

Example 2

In order to estimate the superior characteristics obtained by using the lauric acid alkali metal salt soaps, various tests were carried out in the same manner as Example 1, but by varying the amount of addition of the soaps. The results of the estimate are shown in Table 3. It should be noted that the lauric acid sodium soap is solid, while the lauric acid potassium soap is liquid and has better dispersing and mixing properties than that of the solid lauric acid sodium soap. Thus, in this example, the lauric acid potassium soap was used.

## Table 3

| | Present invention | | | | | | | Reference example |
|---|---|---|---|---|---|---|---|---|
| | Lauric acid potassium soap | | | | | | | Diethylene glycol stearate |
| Amount of addition (wt%) | 0.05 | 0.1 | 0.2 | 0.5 | 1.0 | 1.5 | 2.0 | 1.0 |
| Surface activation | △ | ○ | ◎ | ◎ | ◎ | ◎ | ◎ | △ |
| Coefficient of thermal expansion ($\times 10^{-6}$/40~800°C) | 0.9 | 0.7 | 0.6 | 0.6 | 0.6 | 0.6 | 0.6 | 0.9 |
| Water absorption (%) | 18.2 | 19.5 | 20.0 | 21.5 | 23.1 | 24.4 | 26.0 | 19.2 |
| Average diameter of pore (μm) | 6.1 | 6.7 | 7.0 | 7.6 | 8.4 | 8.9 | 9.6 | 5.7 |
| Spalling strength in electric furnace(°C) | 800 | 900 | 950 | 950 | 950 | 950 | 950 | 800 |

It is appreciated from the results in Table 3 that the coefficient of thermal expansion is $0.7\times10^{-6}$/40~800°C for addition of lauric acid potassium soap 0.1 wt% and is reduced to $0.6 \times 10^{-6}$/40~800°C by addition of 0.2~2.0 wt%. The water absorption increases as the amount of addition of lauric acid potassium soap increases so that the water absorption can be controlled by the amount of addition. The similar tendency can also be found in the average diameter of pore. The thermal shock resistance i.e. "spalling strength in electric furnace" is 900°C for addition of lauric acid potassium soap 0.1 wt% and is increased to as high as 950°C by addition of 0.2~2.0 wt%.

As the result mentioned above, it is appreciated that the lauric acid potassium soap is preferably used by an amount of addition of 0.1~2.0 wt% to exhibit the excellent properties.

Example 3

A mixture of two to five kinds of surface-active agents selected from the fatty acid alkali metal salt series soaps were used in total amount of 1.0 wt% to be added to the raw material. Each of the characteristics is also estimated in the same manner as Example 1. The results are shown in Table 4.

EP 0 360 563 B1

Table 4

| | | | Present invention | | | | | | | Reference example |
|---|---|---|---|---|---|---|---|---|---|---|
| Amount of addition of surface-active agent (wt%) | Lauric acid | Potassium soap | 0.6 | 0.6 | - | - | - | - | - | Diethylene glycol stearate |
| | | Sodium soap | - | - | 0.6 | 0.6 | 0.6 | 0.4 | 0.2 | |
| | Oleic acid | Potassium soap | 0.4 | - | - | - | - | - | - | |
| | | Sodium soap | - | - | 0.4 | - | 0.2 | 0.2 | 0.2 | |
| | Stearic acid | Potassium soap | - | 0.4 | - | - | - | - | - | 1.0 |
| | | Sodium soap | - | - | - | 0.4 | 0.2 | 0.2 | 0.2 | |
| | Caprylic acid sodium soap | | - | - | - | - | - | 0.2 | 0.2 | |
| | Palmitic acid sodium soap | | - | - | - | - | - | - | 0.2 | |
| Surface activation | | | ◎ | ◎ | ◎ | ◎ | ◎ | ○ | ○ | △ |
| Coefficient of thermal expansion ($\times 10^{-6}/40 \sim 800°C$) | | | 0.6 | 0.6 | 0.6 | 0.6 | 0.6 | 0.6 | 0.7 | 0.9 |
| Water absorption (%) | | | 22.9 | 22.7 | 22.5 | 22.6 | 22.4 | 22.1 | 22.0 | 19.2 |
| Average diameter of pore (μm) | | | 8.4 | 8.2 | 8.1 | 8.0 | 8.1 | 8.0 | 7.9 | 5.7 |
| Spalling strength in electric furnace (Ping sound change temperature) (°C) | | | 950 | 950 | 950 | 950 | 950 | 925 | 900 | 800 |

It is appreciated from the results in Table 4 that all the characteristics of the honeycomb structural bodies produced by using the mixed fatty acid alkali metal salt series soaps are more superior than the reference example used diethylene glycol stearate. That is, fatty acid alkali metal salt series soaps obtained from a starting material of a natural vegetable oil including a plurality of fatty acids also may be used as the surface-active agents to obtain the superior characteristics. The characteristics are not significantly varied with the number of kinds of the fatty acid alkali metal salt series soaps to be mixed and the amount of addition thereof, but are generally more superior as the amount of the lauric acid alkali metal salt series soap to be added is increased.

It is seen from the above description that in the method of producing the ceramic honeycomb structural bodies according to the present invention, by using one or more fatty acid alkali metal salt series soaps having the same lubricating properties and wettability as that of the conventionally used diethylene glycol stearate as well as a high extrudability and a behavior for sustaining a green strength, ceramic honeycomb structural bodies having superior characteristics can be produced.

## Claims

1. A method of producing a cordierite ceramic honeycomb structural body, including the step of extruding a cordierite raw material containing kaolin, to form a green ceramic honeycomb structural body characterized by including in said raw material a surface-active agent consisting of one or more fatty acid alkali metal salt series soaps.

2. A method as claimed in claim 1, wherein said surface-active agent consists of not more than five fatty acid alkali metal salt series soaps selected from lauric acid alkali metal soap, oleic acid alkali metal soap, caprylic acid alkali metal soap, palmitic acid alkali metal soap and stearic acid alkali metal soap.

3. A method as claimed in claim 1 or claim 2 wherein said surface-active agent is used in amount of 0.1-2.0 wt%.

4. A method as claimed in claim 2, wherein lauric acid alkali soap is used in amount of 0.1-2.0 wt%, based on the weight of the green body.

## Patentansprüche

1. Verfahren zur Herstellung eines keramischen Cordieritkörpers mit Wabenstruktur, umfassend den Schritt des Extrudierens eines Kaolin enthaltenden Cordieritrohmaterials zum Bilden eines grünen keramischen Körpers mit Wabenstruktur, dadurch gekennzeichnet, daß im genannten Rohmaterial ein oberflächenaktives Mittel enthalten ist, das aus einem oder mehreren Alkalimetallsalzen der Fettsäureseifenreihe besteht.

2. Verfahren nach Anspruch 1, worin das genannte oberflächenaktive Mittel aus nicht mehr als fünf Alkalimetallsalzen der Fettsäureseifenreihe besteht, die aus Laurinsäurealkalimetallseife, Ölsäurealkalimetallseife, Caprylsäurealkalimetallseife, Palmitinsäurealkalimetallseife und Stearinsäurealkalimetallseife ausgewählt sind.

3. Verfahren nach Anspruch 1 oder 2, worin das genannte oberflächenaktive Mittel in einer Menge von 0,1 - 2,0 Gew.-% verwendet wird.

4. Verfahren nach Anspruch 2, worin Laurinsäurealkaliseife in einer Menge von 0,1 - 2,0 Gew.-%, bezogen auf das Gewicht des grünen Körpers, verwendet wird.

## Revendications

1. Une méthode de fabrication d'un élément structurel alvéolé céramique en cordiérite comprenant l'étape d'extrusion d'une matière première de cordiérite contenant du kaolin pour former un élément structurel alvéolé céramique vert ou cru, caractérisée par l'inclusion dans ladite matière première d'un agent tensio-actif composé d'un ou plusieurs savons de la série des sels d'un métal alcalin et d'acide gras.

2. Une méthode, selon la revendication 1, dans laquelle ledit agent tensio-actif se compose de cinq savons maximum de la série des sels d'un métal alcalin et d'acide gras choisis parmi le savon alcalin d'acide laurique, le savon alcalin d'acide oléique, le savon alcalin d'acide caprylique, le savon alcalin d'acide palmitique et le savon alcalin d'acide stéarique.

3. Une méthode, selon la revendication 1 ou 2, dans lesquelles ledit agent tensio-actif est utilisé dans une quantité de 0,1 à 2,0 % en poids.

4. Une méthode, selon la revendication 2, dans laquelle la savon alcalin d'acide laurique est utilisé en quantité de 0,1 à 2,0 % en poids par rapport au poids de l'élément vert.